# EUROPEAN PATENT SPECIFICATION

(11) **EP 0 900 523 B1**
(45) Date of publication and mention of the grant of the patent: **27.03.2002**
(21) Application number: 98203804.4
(22) Date of filing: 21.09.1994
(51) Int. Cl.: A01J 5/017, A01J 7/04

(54) **A construction for automatically milking animals**
Konstruktion zum automatischen Melken von Tieren
Installation de traite automatique d'animaux

(30) Priority: 23.09.1993 NL 9301643
(43) Date of publication of application: 10.03.1999
(62) Divisional of application: 94202714.5
(73) Proprietor: MAASLAND N.V., 3155 PD Maasland (NL)
(72) Inventor: Van der Lely, Cornelis, 6300 Zug (CH)
(74) Representative: Corten, Maurice Jean F.M.

(56) References cited:
- EP-A- 0 332 235
- EP-A- 0 347 004
- EP-A- 0 551 958
- WO-A-93/13651
- FR-A- 2 408 300

## Description

The present invention relates to a construction for the automatic milking of animals, as claimed in the preamble of claim 1.

Such a construction is known.

In said construction it is desirable to clean the udder and teats of the animal, and to connect the teat cups to the teats in a proper way.

It is an objective of the invention to provide a construction of the above type, in which the cleaning of teats and/or udder takes place in a simple way.

According to the invention, this is achieved by the features defined in the characterizing part of claim 1.

According to the invention, air is principally used as the medium for cleaning the animal's udder and/or teats.

According to the invention, cleaning the udder and/or teats takes place by means of the mouthpiece scanning the whole udder from left to right and from front to rear.

In a preferred embodiment of the invention, the suction mouthpiece is circular or semi-circular.

The invention also relates to a construction for the automatic milking of animals, such as cows, characterized in that the teat cups are provided with a suction mouth, while there is further provided a mainly continuously sucking pump for drawing-in air through this suction mouth for the cleaning of the udder and/or the teats.

In the first exemplary embodiment of the invention, the suction mouthpiece is constituted by the upper part of the teat cup. To prevent the teat cups and teats from being injured, the outer edge of the suction mouthpiece according to the invention is made of a flexible material.

To prevent that in the first exemplary embodiment the teat cups interfere with each other and that in the second exemplary embodiment a complicated positioning procedure has to be followed, the suction mouthpiece according to the invention has a diameter of the same order as the teat cup diameter.

In the first exemplary embodiment, the air outlet line is according to the invention disposed near the upper end of a teat cup. In the two exemplary embodiments, the suction system according to the invention comprises means, with the aid of which the air line is closed during milking or in the condition of rest.

To prevent a teat from becoming injured when it is against the suction mouthpiece, the suction mouthpiece is according to the invention provided with a certain profile allowing air to be drawn in when a teat is against the suction mouthpiece. In a preferred embodiment according to the invention, the profile comprises ridges extending in the longitudinal direction.

To prevent dirt from entering the teat cups, the teat cups are according to the invention provided with closing means, which close the milk hose and/or pulsation hose when air is drawn in through the suction mouthpiece and the air hose.

To determine whether a teat is correctly positioned in the teat cup, the construction according to the invention comprises one or more sensors, by means of which data concerning the position of a teat in the teat cup can be obtained and also the suction force in the air hose can be automatically adjusted in accordance with said data.

According to another aspect of the invention, the teat cups are attached to a holder of the milking robot by means of a flexible connection, such as a short cable, all this being such that during milking the teat cups are at a certain distance from, and freely movable with respect to the holder.

According to still another aspect of the invention, the coupling of the teat cups is mainly based on moving the openings of the teat cups past the animal's udder, while a vacuum prevails in these openings.

The invention will be further explained with reference to the accompanying drawings, in which:
Figure 1 is the plan view of a milking parlour equipped with a milking robot, including the outline of a dairy animal, in the present case a cow;
Figure 2 is a view of the milking robot according to arrow II-II in Figure 1;
Figure 3 is a plan view of an enlarged portion of the robot arm, on which teat cups are disposed;
Figure 4 is a plan view in accordance with Figure 3, with a schematic representation of the position of the teat cups in relation to, and their attachment to, the robot arm during the milking of the animal;
Figure 5 is a longitudinal section of a first embodiment of a searching device comprising a teat cup and a suction mouthpiece arranged therein;
Figure 6 shows a second embodiment of a searching device;
Figure 7 shows a third embodiment of a searching device, and
Figure 8 shows a side view of the searching device in accordance with Figure 6, where a teat cup is at the point of being connected to a teat.

Corresponding parts in the drawings are indicated by the same reference numbers. The invention is by no means limited to the embodiments depicted and described here; they are only to illustrate the inventive idea.

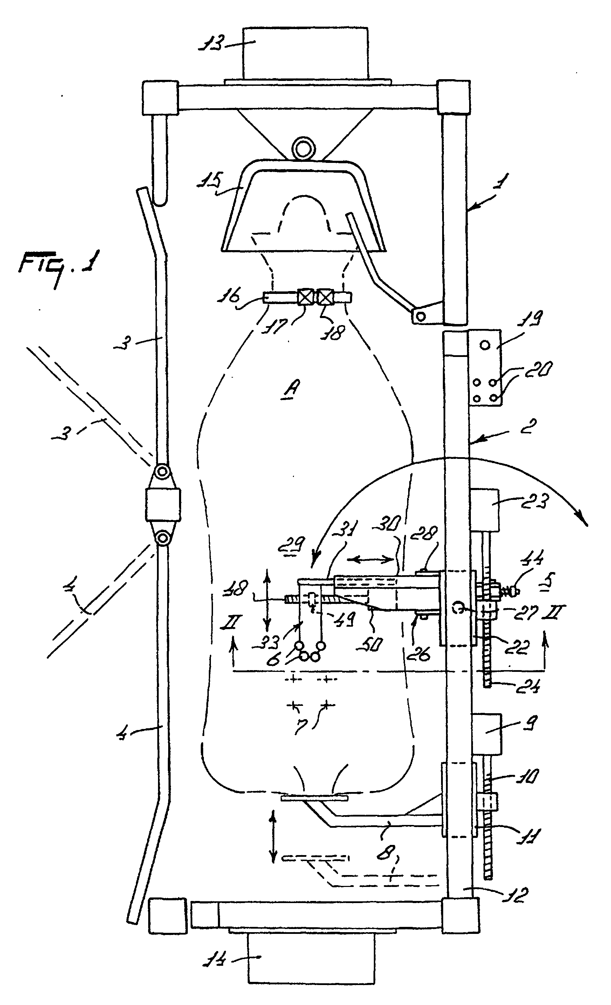

Figure 1 shows a milking parlour in which there is a dairy animal, in the present case a cow A, within a fencing comprising the front fencing part 1, the rear fencing part 2, and the fencing doors 3 and 4. The milking parlour is provided with a milking robot 5, by means of which teat cups 6 can be connected to the schematically represented teats 7 of the udder of the cow A. For a coarse determination of a necessary starting point, the milking robot operates in conjunction with a contact device 8. The contact device 8 is movable along a horizontal support 12 which is part of the rear fencing part 2, by means of a stepping motor 9, a lead screw 10 attached to it, and a straight guide 11. Such a support 12 can also be disposed on or next to an existing fencing. The milking parlour comprises a computer system 13 which controls an automatic feeder. The computer system 13 of the automatic feeder operates independently of a computer system 14 for the milking robot and, every time when it signalizes, recognizes and also accepts an animal A in the milking parlour 1, it dispenses a quantity of feed adjusted to the relevant animal into a feed trough 15 mounted on the front fencing part 1.

The dairy animal is provided with a collar 16 bearing two separate indication and information devices 17 and 18. Each of these devices is at the disposal of one of the two computer systems 13, 14 as to secure the independent operation of the two computers. Furthermore, the milking parlour is provided with an indication device 19 for measuring the milk flow originating from a teat 7 of the udder of the animal A. For each teat, there is provided a light-emitting device 20 which lights up when it has been established, through a sensor in a teat cup 6 or in the milk line 21 of a certain teat cup 6, that the milk flow has dropped below a given value to be set. The indication device 19 can also be provided with two light-emitting devices for the milk flow from each teat 7, the one of which radiating green light during milking and the other radiating red light when the milk flow from a corresponding teat has fallen below the set threshold value. In still another design, the indication device is of an acoustic type, such as a buzzer.

The milking robot 5 is disposed movably in the longitudinal direction of the milking parlour, i.e. in the direction of the imaginary line between head and tail of the dairy animal A in the milking parlour, and is mounted on a horizontal support 12 which is part of the rear fencing part 2. For this purpose, the milking robot 5 comprises a straight guide 22, a stepping motor 23 driving a lead screw 24 which acts on the straight guide 22. Here, the stepping motor 23 is controlled by the computer 14 of the milking robot.

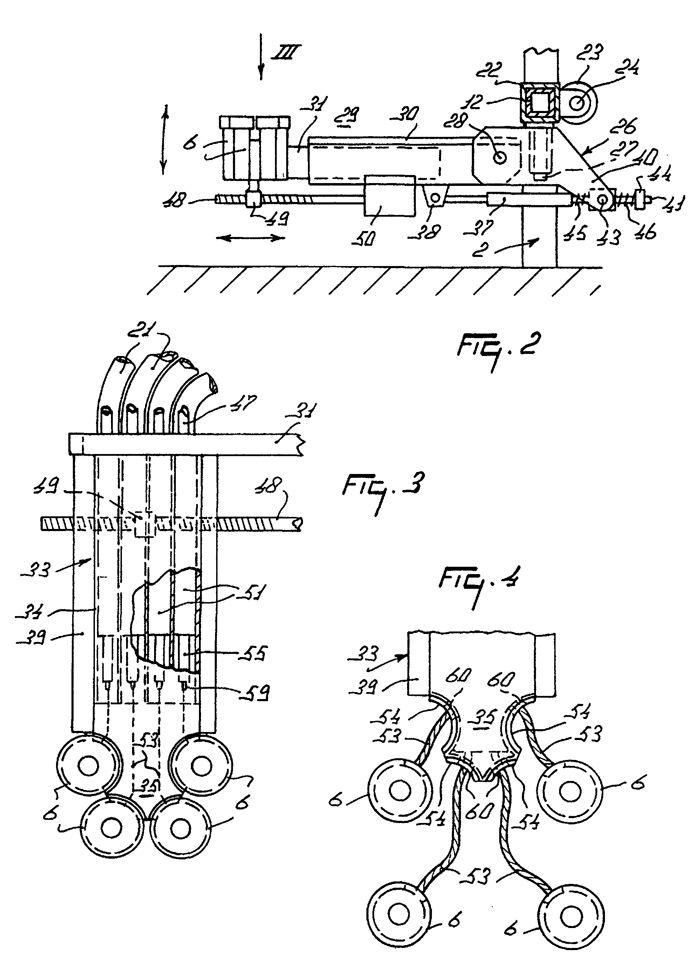

Figure 2 shows, at the lower end of the straight guide 22, a holder 26 hinge-mounted on a shaft 27 vertically attached to the straight guide 22. On the holder 26, there is provided, hinge-mounted on a horizontal shaft 28, a telescopic arm 29 comprising a fixed part 30 and a part 31 slidable therein. A carrier member 33 for the teat cups 6 is disposed square to the end of the slidable arm part 31. The carrier member 33 comprises a housing part 34 and a seating part 35, which parts are integrated in the present design. The slidable arm part and the teat cups on it are movable with respect to the fixed arm part 30 by means of a lead screw 48 which engages a threaded member 49 at the bottom of the carrier member 33. The lead screw 48 is driven by a stepping motor 50 which is controlled by the computer system 14 of the milking robot 5.

With respect to the holder 26, the arm 29 is supported and, when energized, capable of being swivelled by means of an adjusting cylinder 37. Near the centre of the fixed arm part 30, the adjusting cylinder piston rod acts on a horizontal shaft 38 mounted between two lugs on the fixed arm part. The adjusting cylinder 37 is in line with the arm 29 and it extends, underneath the end of the vertical shaft 27, to a holder arm 40 of the holder 26. The cylinder part of the adjusting cylinder 37 is supported, with respect to the holder arm 40, through a rod 41 mounted in line with the cylinder and fed through a hole in a block 42 hinge-mounted to the holder arm 40 through horizontal pivots 43. An adjusting nut 44 is fitted on the threaded end of the sliding rod 41. A compression spring 45 is fitted between the cylinder part of the adjusting cylinder 37 and the block 42, and a second compression spring 46 is fitted between the adjusting nut 44 and the block 42.

In the housing part 34 of the carrier member 33 there are provided, disposed at right angles to the arm 29, four fixed cylinders 51 which are capable of being operated pneumatically or hydraulically through supply hoses 47 (Figure 3). Attached to the piston rod 55 of each of the cylinders 51 is a pulling device 53 which is connected with a teat cup 6. In a condition of rest, the piston rod 55 of a cylinder 51 is withdrawn so far that a teat cup 6 is drawn against seating face 54 provided on the seating part 35 of the carrier member 33.

Figure 4 shows the arrangement of the teat cups 6 during milking. In this drawing, the pulling device 53 is not tightened, allowing the milked animal A to move independently of the robot arm 30. A seating face 54 has a curvature which at least to a certain extent corresponds with the circumferential curvature of a teat cup 6. The seating faces 54 are provided on the carrier member 33, which is in the shape of an approximately square tube 34. The pulling device 53 is preferably placed between upright walls of the tube, so that a stable contact of cup 6 with seating part 35 is always obtained when it is pulled. In the present design, the seating face 54 closing the tube 34 is a wall 58, in which one or a plurality of openings 60 for the pulling device 53 are provided. The openings are cone-shaped, enabling the pulling device 53 at different angles to be drawn smoothly through the opening 60. A pulling device 53 is connected with piston rod 55 through an intermediate member 59. The intermediate member can be in the shape of an isosceles triangle, while, near the top angle of said triangular shape, the intermediate member 59 is hinged to the piston rod 55. The pulling device 53 comprises two cables or cords of a suitable flexible material, which cables are fastened on one end on a side, i.e. on an upright wall of a teat cup 6. The other end can be disposed on the intermediate member 59.

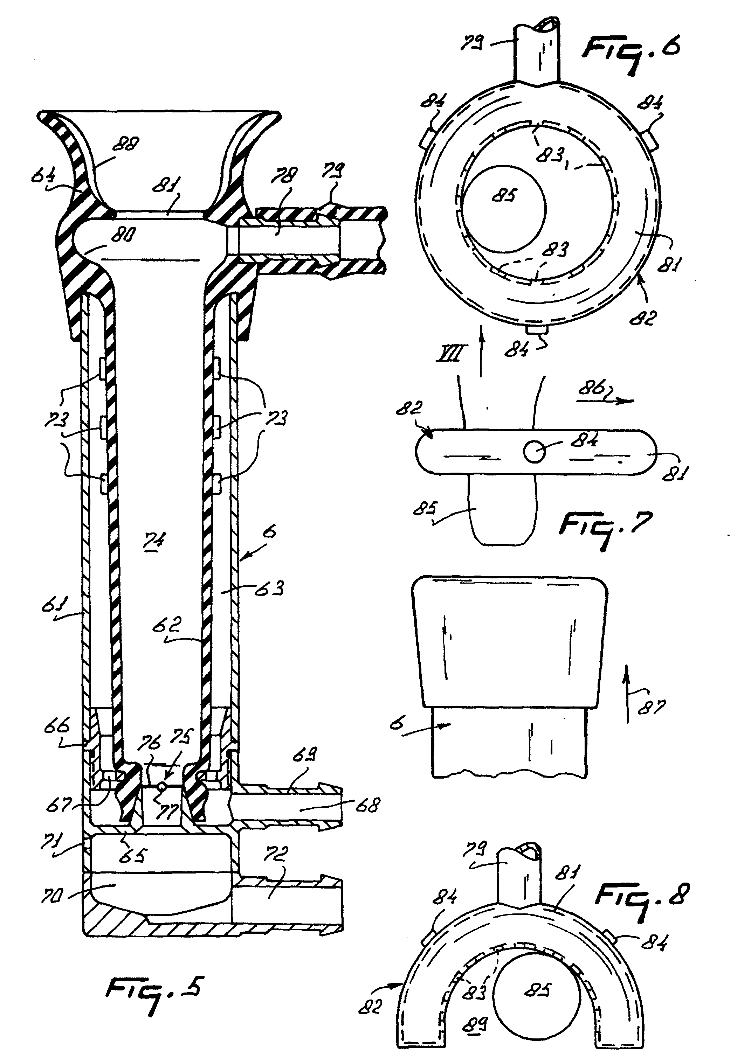

Figure 5 depicts a longitudinal section of a teat cup 6; the latter is in the usual manner composed of a fixed house 61, e.g. made of a metal, accommodating an inner wall 62 made of a flexible material, e.g. rubber, and a rubber cap 64 closing, on the upper side, the interspace 63 between the sleeve 61 and the inner wall 62. On the lower side, the interspace between the sleeve 61 and the inner wall 62 is closed by a sealing ring 65, while above this, between the sleeve 61 and the inner wall 62, there is provided a ring 66 having an opening 67. Between the sealing ring 65 and the ring 66 is a space to which, through an opening 68 and a line 69, a pulsating vacuum is applied by a pulsation system, which gives rise to a pulsating vacuum in the space between the sleeve 61 and the inner wall 62, which vacuum, when the teat cup has been connected in the appropriate way, causes the inner wall 62 to enclose the teat tightly, respectively to release it by moving outwards, resulting in the rhythmic motion around the teat which is required for milking. As a buffer for the milk to be collected and to minimize fluctuations in the vacuum under the teat, in the lower part of the teat cup 6 there is present a buffer space 70 which is provided with a relatively narrow air suction opening 71 on behalf of the milk transport. The line 72 serving for milk removal to a milk meter is connected to this buffer space. In the interspace 63 there are disposed several sensors 73, arranged in the longitudinal direction of the sleeve 61 and placed on the inner wall 62, to determine whether, and, if so, how far a teat has penetrated into the space 74 of the teat cup 6. Between the space 74 and the buffer space 77, near the sealing ring 65 there are provided closing means 75, with the aid of which it is possible to isolate the buffer space 77 from the space 74. The closing means 75 comprise a valve 76, which is pivotable about a shaft 77.

Fitted in the rubber cap 64 near the upper end of the sleeve 61 is a nipple 78, which opens into the space 74 and is connected to an air line 79. The air line 79 is connected with a suction system (not shown) including a continuously sucking pump whose suction power is controllable. To be able to shut off the air line 79, there are provided means (not shown) for closing the air line 79. In line with the nipple 78, a concentric recess 80 is provided in the rubber cap 64. In combination with the cup-shaped upper portion of the rubber cap 64, the recess 80 constitutes a suction mouthpiece 81, through which air can be drawn in. If a relatively high vacuum is applied to the air line 79, the teat cup 6 functions as a mouthpiece of a vacuum cleaner, as it were. When the teat cup 6 is moved underneath the udder, the teat cup 6 can function as a searching device for locating the teats, and where a teat is in the vicinity of the suction mouthpiece 81, the relevant teat is drawn into the teat cup 6. During the search for a teat with the teat cup 6, the buffer space 70 is shut off from the space 74 by means of valve 76, thus preventing dirt or other impurities from entering the buffer space 70 and/or the lines 69 and 72. As soon as a teat is sucked into the space 74, this is detected by sensors 73. After this, the suction force in the air line 79 is automatically reduced, valve 76 is opened and a vacuum is applied to the buffer space 70 and the space 74. This will cause the teat to be drawn in further into the space 74, whereupon a varying vacuum can be applied to the intermediate space 63 through the pulsation line 69 and milking can start.

Figures 6 to 8 show two other exemplary embodiments of search devices, by means of which the teats of an animal to be milked can be found. In Figure 6 and in Figure 8, the search device 82 is formed by a circular mouthpiece 81 made of a tube and, in the inner wall, provided with openings 83, through which air can be drawn in. An air line 79, similar to the air line 79 depicted in Figure 5, is connected to the circular suction mouthpiece 81 through its outer wall. Furthermore, on the outside of the suction mouthpiece 81 there are provided several air flow sensors 84, by means of which it is possible to determine whether the air flow in the suction mouthpiece 81 changes. In the event that a teat 85, as shown in Figure 6, is drawn against the inner wall of the suction mouthpiece 81, this results in a change in the air stream in the tube, which is immediately recorded by the air flow sensors 84. To prevent the teat 85 from being drawn too tight against the suction mouthpiece 81, the suction mouthpiece 81, as represented in Figure 5, may be provided with ribs 88, along which air can be drawn in, even when a teat is against the suction mouthpiece 81. To be able to find the teats with the suction mouthpiece 81, the suction mouthpiece 81 according to Figures 6 to 8 is connected to a robot arm (not shown), by means of which the suction mouthpiece 81 can be moved underneath the udder of an animal to be milked. When the suction mouthpiece 81 has drawn a teat against the inner wall, the suction mouthpiece 81 functions as a point of reference for positioning a teat cup which should be connected to the relevant teat. As indicated in Figure 7, for this purpose the teat cup is put under the suction mouthpiece 81 through a robot arm (not shown), after which, at the same time, the vacuum in the air line 79 is interrupted and the suction mouthpiece 81 is moved in the direction of arrow 86, while the teat cup is moved in the direction of arrow 87. This will cause the teat 85 to whip across the suction mouthpiece 81 and then to be drawn immediately into the opening of the teat cup being lifted. It should be noted that in the exemplary embodiments reflected by Figures 6 to 8, even though the teat cups are moved by means of a robot arm, a standard type of teat cup can be used.

Apart from the fact that it is practicable to position a teat cup under a relevant teat and to connect it on the basis of the suction mouthpiece 81 position, it will be obvious that it is also practicable to subject the relevant teat to any other treatment, such as teat cleaning by means of brushes (not shown), or teat disinfection by means of a spray device.

The search device 82 in Figure 7 is formed by a semi-circular suction mouthpiece 81 which in general operates in the same manner as the search device represented in Figure 6 and in Figure 8. As regards the suction mouthpiece 81 according to Figure 7, the teat 85 does not need to whip across the tubular body 81 for making contact by suction or for uncoupling, because the teat 85 is allowed to leave the suction mouthpiece 81 via the recess 80 between the two legs of the semi-circular suction mouthpiece 81. An advantage of the exemplary embodiment shown in Figure 7 is that it is possible to keep the teat 85 drawn against the suction mouthpiece when the teat 85 has already partly or fully disappeared into the teat cup moving upwards.

It will be obvious that the circular suction mouthpiece 81 as represented in Figure 6 can also be integrated with the teat cup 6 as represented in Figure 5. Here, the circular suction mouthpiece 81 may be disposed in the recess 80.

To realize a simple and efficient coupling of the teat 85 to the teat cup moving upwards, the suction mouthpiece 81 in Figures 6 to 8 has a diameter of the same order as that of the relevant teat cup.

Apart from the fact that with the search device 82 it is practicable to find the teats of an animal to be milked and to connect the teat cups thereafter, with the search device 82 it is also practicable to clean the teats and/or udder of an animal to be milked. When a cow has entered the milking parlour, the suction mouthpiece(s) is (are) put under and against the animal's udder and, as it were like a vacuum cleaner (vacuum cleaners), is (are) moved along the udder by means of one (or a plurality of) robot(s). To prevent the milk line 72 and the pulsation line 69 from becoming contaminated, the valves 76 are operated in the case of the exemplary embodiment as shown in Figure 5. In a preferred embodiment, only one of four suction mouthpieces is used during cleaning. In cleaning the udder, the suction mouthpiece 81 is automatically moving to and fro, while, in the event that a suction mouthpiece 81 comes under a teat of the animal, the relevant teat is automatically sucked into the relevant teat cup. Subsequently, a vacuum is maintained in the air line 79 for a few seconds, if necessary, then the pressure is removed and valve 75 is opened and a vacuum is applied to the space 74 through the milk line 72. Since the teat cup is connected to the robot arm 30 through the flexible pulling device 53, the teat cup is capable of moving freely after coupling. By this method, the teat cup is coupled to the teat in a manner agreeable to the animal. In the meantime, a next teat cup has been engaged and the udder and teats are further cleaned with the suction mouthpiece 81 until this teat cup is also sucked onto a teat. This procedure repeats itself until all teats have been cleaned and coupled. If sucking a teat into a teat cup is not fast enough and not in the appropriate way, the robot arm is automatically set into vibration, if required. It is also possible to augment the suction force in the air line 79 automatically at the same time.

The invention is not limited to what has been described hereinbefore, but it also covers all what is shown in the drawings.

## Claims

1. A construction for the automatic milking of animals, such as cows, by means of a milking robot (5) and one or more teat cups (6), **characterized in that** it comprises a suction system, of which the suction mouthpieces (81) are automatically movable such that the animal's udder and/or teats are automatically cleanable by means of the suction system.

2. A construction according to claim 1, **characterized in that** it comprises a teat cup (6) for cleaning the animal's udder and/or teats, which is designed such that it uses mainly air as a medium.

3. A construction according to claim 1 or 2, **characterized in that** cleaning the animal's udder and/or teats takes place by means of the mouthpiece (81) scanning the whole udder from left to right and from front to rear.

4. A construction according to any one of the preceding claims, **characterized in that** the teat cups (6) are attached to a holder (34) of the milking robot (5) by means of a flexible connection (53), such as a short cable, the arrangement being such that during milking the teat cups (6) are at a certain distance from, and freely movable with respect to the holder (54).

5. A construction according to any one of the preceding claims, **characterized in that** coupling the teat cups (6) to the animal's teats is principally based on moving the openings (80) of the teat cups (6) along the animal's udder, with a vacuum prevailing in these openings (80).

6. A construction according to any one of the preceding claims, **characterized in that** the suction mouthpiece (81) is circular or semi-circular.

7. A construction according to any one of the preceding claims, **characterized in that** the suction mouthpiece (81) is constituted by the upper part of the teat cups (6).

8. A construction according to any one of the preceding claims, **characterized in that** the outer edge of the suction mouthpiece (81) is made of a flexible material.

9. A construction according to any one of the preceding claims, **characterized in that** the suction mouthpiece (81) is made of rubber or plastic.

10. A construction according to any one of the preceding claims, **characterized in that** the suction mouthpiece (81) has a diameter of the same order as the teat cup diameter.

11. A construction according to any one of the preceding claims, **characterized in that** it comprises a continuously sucking pump for drawing-in air through the suction mouthpiece (81).

12. A construction according to any one of the preceding claims, **characterized in that** the searching device (6; 82) is connected to a continuously sucking pump through an air outlet line (79).

13. A construction according to claim 12, **characterized in that** the air outlet line (79) is provided near the upper side of a teat cup (6).

14. A construction according to any one of the preceding claims, **characterized in that** the suction system comprises means, with the aid of which the air line (79) is closed during milking or in the condition of rest.

15. A construction according to any one of the preceding claims, **characterized in that** the suction force in the air line (79) is adjustable.

16. A construction according to any one of the preceding claims, **characterized in that** it comprises one or more sensors (73), by means of which data concerning the position of a teat in the teat cup (6) can be obtained, while also the suction force in the air line (79) is automatically adjusted in accordance with said data.

17. A construction according to any one of the preceding claims, **characterized in that** the suction mouthpiece (81) is provided with a certain profile allowing air to be drawn in when a teat is against the suction mouthpiece (81).

18. A construction according to claim 17, **characterized in that** the profile comprises ridges (88) extending in the longitudinal direction of a teat cup.

19. A construction according to any one of the preceding claims, **characterized in that** the teat cups (6) are provided with closing means which close the milk line when air is drawn in through the suction mouthpiece (81) and the air line (79).

## Patentansprüche

1. Vorrichtung zum automatischen Melken von Tieren, wie z. B. Kühen, mit Hilfe eines Melkroboters (5) und eines oder mehrerer Zitzenbecher (6),
**dadurch gekennzeichnet, daß** die Vorrichtung eine Saugvorrichtung umfaßt, deren Saugmundstücke (81) automatisch in der Weise bewegbar sind, daß das Euter und/oder die Zitzen des Tieres mittels der Saugvorrichtung automatisch gereinigt werden können.

2. Vorrichtung nach Anspruch 1,
**dadurch gekennzeichnet, daß** die Vorrichtung zum Reinigen des Euters und/oder der Zitzen des Tieres einen Zitzenbecher (6) umfaßt, der derart ausgebildet ist, daß er hauptsächlich Luft als Medium benutzt.

3. Vorrichtung nach Anspruch 1 oder 2,
**dadurch gekennzeichnet, daß** das Reinigen des Euters und/oder der Zitzen des Tieres mittels des Mundstückes (81) erfolgt, welches das gesamte Euter von links nach rechts und von vorn nach hinten abtastet.

4. Vorrichtung nach einem der vorhergehenden Ansprüche,
**dadurch gekennzeichnet, daß** die Zitzenbecher (6) an einem Halter (34) des Melkroboters (5) mittels einer flexiblen Verbindung (53), wie z. B. einer kurzen Schnur, angebracht sind, wobei die Anordnung so getroffen ist, daß die Zitzenbecher (6) während des Melkens in einem bestimmten Abstand von dem Halter (54) und relativ zu diesem frei bewegbar angeordnet sind.

5. Vorrichtung nach einem der vorhergehenden Ansprüche,
**dadurch gekennzeichnet, daß** der Anschluß der Zitzenbecher (6) an die Zitzen des Tieres im wesentlichen darauf beruht, daß die Öffnungen (80) der Zitzenbecher (6) an dem Euter des Tieres entlangbewegt werden, wobei in diesen Öffnungen (80) ein Vakuum herrscht.

6. Vorrichtung nach einem der vorhergehenden Ansprüche,
**dadurch gekennzeichnet, daß** das Saugmundstück (81) kreisförmig oder halbkreisförmig ist.

7. Vorrichtung nach einem der vorhergehenden Ansprüche,
**dadurch gekennzeichnet, daß** das Saugmundstück (81) durch den oberen Teil der Zitzenbecher (6) gebildet ist.

8. Vorrichtung nach einem der vorhergehenden Ansprüche,
**dadurch gekennzeichnet, daß** der äußere Rand des Saugmundstückes (81) aus einem flexiblen Material hergestellt ist.

9. Vorrichtung nach einem der vorhergehenden Ansprüche,
**dadurch gekennzeichnet, daß** das Saugmundstück (81) aus Gummi oder Kunststoff hergestellt ist.

10. Vorrichtung nach einem der vorhergehenden Ansprüche,
**dadurch gekennzeichnet, daß** das Saugmundstück (81) einen Durchmesser derselben Größenordnung wie der Zitzenbecherdurchmesser hat.

11. Vorrichtung nach einem der vorhergehenden Ansprüche,
**dadurch gekennzeichnet, daß** die Vorrichtung eine kontinuierlich arbeitende Saugpumpe zum Einsaugen von Luft durch das Saugmundstück (81) aufweist.

12. Vorrichtung nach einem der vorhergehenden Ansprüche,
**dadurch gekennzeichnet, daß** die Suchvorrichtung (6; 82) über eine Luftaustrittsleitung (79) mit einer kontinuierlich arbeitenden Saugpumpe verbunden ist.

13. Vorrichtung nach Anspruch 12,
**dadurch gekennzeichnet, daß** die Luftaustrittsleitung (79) nahe der Oberseite eines Zitzenbechers (6) angeordnet ist.

14. Vorrichtung nach einem der vorhergehenden Ansprüche,
**dadurch gekennzeichnet, daß** die Saugvorrichtung eine Einrichtung aufweist, mittels der die Luftleitung (79) während des Melkens oder in der Ruhelage geschlossen wird.

15. Vorrichtung nach einem der vorhergehenden Ansprüche,
**dadurch gekennzeichnet, daß** die Saugkraft in der Luftleitung (79) einstellbar ist.

16. Vorrichtung nach einem der vorhergehenden Ansprüche,
**dadurch gekennzeichnet, daß** die Vorrichtung einen oder mehrere Sensoren (73) aufweist, mittels derer Daten bezüglich der Position einer Zitze im Zitzenbecher (6) zu erzielen sind, wobei gemäß diesen Daten auch die Saugkraft in der Luftleitung (79) automatisch eingestellt wird.

17. Vorrichtung nach einem der vorhergehenden Ansprüche,
**dadurch gekennzeichnet, daß** das Saugmundstück (81) ein bestimmtes Profil aufweist, das das Einsaugen von Luft ermöglicht, wenn eine Zitze an dem Saugmundstück (81) anliegt.

18. Vorrichtung nach Anspruch 17,
**dadurch gekennzeichnet, daß** das Profil Rippen (88) aufweist, die sich in Längsrichtung eines Zitzenbechers erstrecken.

19. Vorrichtung nach einem der vorhergehenden Ansprüche,
**dadurch gekennzeichnet, daß** die Zitzenbecher (6) eine Schließvorrichtung aufweisen, die die Milchleitung verschließt, wenn durch das Saugmundstück (81) und die Luftleitung (79) Luft eingesaugt wird.

## Revendications

1. Structure pour la traite automatique d'animaux, tels que des vaches, au moyen d'un robot de traite (5) et d'un ou plusieurs gobelet(s) trayeur(s) (6), **caractérisée en ce qu'**elle comprend un système d'aspiration, dont les embouts d'aspiration (81) peuvent être déplacées automatiquement de telle sorte que le pis et/ou les tétines de l'animal peu(ven)t être nettoyé(es) automatiquement au moyen du système d'aspiration.

2. Structure selon la revendication 1, **caractérisée en ce qu'**elle comprend un gobelet trayeur (6) destiné à nettoyer le pis et/ou les tétines de l'animal, qui est conçue de telle sorte qu'elle utilise principalement l'air comme milieu.

3. Structure selon la revendication 1 ou 2, **caractérisée en ce que** le nettoyage du pis et/ou des tétines de l'animal est réalisé au moyen de l'embout (81) balayant l'ensemble du pis de gauche à droite et d'avant en arrière.

4. Structure selon l'une quelconque des revendications précédentes, **caractérisée en ce que** les gobelets trayeurs (6) sont fixés à un dispositif de retenue (54) du robot de traite (5) au moyen d'une connexion souple (53), tel qu'un câble court, l'agencement étant tel que lors de la traite, les gobelets trayeurs (6) sont situés à une certaine distance de, et peuvent être librement déplacés par rapport au dispositif de retenue (54).

5. Structure selon l'une quelconque des revendications précédentes, **caractérisée en ce que** le fait de coupler les gobelets trayeurs (6) aux tétines de l'animal se base principalement sur le déplacement des ouvertures (80) des gobelets trayeurs (6) le long du pis de l'animal, un vide régnant dans ces ouvertures (80).

6. Structure selon l'une quelconque des revendications précédentes, **caractérisée en ce que** l'embout d'aspiration (81) est circulaire ou semi-circulaire.

7. Structure selon l'une quelconque des revendications précédentes, **caractérisée en ce que** l'embout d'aspiration (81) se compose de la partie supérieure des gobelets trayeurs (6).

8. Structure selon l'une quelconque des revendications précédentes, **caractérisée en ce que** le bord extérieur de l'embout d'aspiration (81) est fabriqué à partir d'un matériau en plastique.

9. Structure selon l'une quelconque des revendications précédentes, **caractérisée en ce que** l'embout d'aspiration (81) est fabriqué à partir de caoutchouc ou de plastique.

10. Structure selon l'une quelconque des revendications précédentes, **caractérisée en ce que** l'embout d'aspiration (81) présente un diamètre du même ordre que le diamètre du gobelet trayeur.

11. Structure selon l'une quelconque des revendications précédentes, **caractérisée en ce qu'**elle comprend une pompe aspirante en continu destinée à aspirer de l'air à travers l'embout d'aspiration (81).

12. Structure selon l'une quelconque des revendications précédentes, **caractérisée en ce que** le dispositif de recherche (6 ; 82) est connecté à une pompe aspirante en continu à travers une conduite de sortie d'air (79).

13. Structure selon la revendication 13, **caractérisée en ce que** la conduite de sortie d'air (79) est prévue à proximité du côté supérieur du gobelet trayeur (6).

14. Structure selon l'une quelconque des revendications précédentes, **caractérisée en ce que** le système d'aspiration comprend des moyens à l'aide desquels la conduite d'air (79) est fermée lors de la traite ou se trouve à l'état d'arrêt.

15. Structure selon l'une quelconque des revendications précédentes, **caractérisée en ce que** la force d'aspiration dans la conduite d'air (79) peut être ajustée.

16. Structure selon l'une quelconque des revendications précédentes, **caractérisée en ce qu'**elle comprend un ou plusieurs détecteur(s) (73), au moyen desquels des données concernant la position d'une tétine dans le gobelet trayeur (6) peuvent être obtenues, tandis que la force d'aspiration dans la conduite d'air (79) est ajustée automatiquement conformément auxdites données.

17. Structure selon l'une quelconque des revendications précédentes, **caractérisée en ce que** l'embout d'aspiration (81) est prévu avec un certain profil permettant à l'air d'être aspiré lorsqu'une tétine repose contre l'embout d'aspiration (81).

18. Structure selon la revendication 17, **caractérisée en ce que** le profil comprend des arêtes (88) s'étendant dans le sens longitudinal d'un gobelet trayeur.

19. Structure selon l'une quelconque des revendications précédentes, **caractérisée en ce que** les gobelets trayeurs (6) sont prévus avec des moyens de fermeture qui ferment la conduite de lait lorsque l'air est aspiré à travers l'embout d'aspiration (81) et la conduite d'air (79).
